# FASCICULE DE BREVET EUROPEEN

(11) **EP 1 836 890 B1**
(45) Date de publication et mention de la délivrance du brevet: **17.11.2010**
(21) Numéro de dépôt: 07104671.8
(22) Date de dépôt: 22.03.2007
(51) Int. Cl.: A01F 15/07

(54) **Machine de mise en balle ronde d'une nappe végétale**
Maschine zum runden Aufrollen einer Pflanzenschicht
Machine for making round balls of a vegetable sheet

(30) Priorité: 22.03.2006 FR 0602499
(43) Date de publication de la demande: 26.09.2007
(73) Titulaire: N.V. Depoortere, 8791 Beveren-Leie (BE)
(72) Inventeur: Tack, Johan, 8720 Oeselgem (BE)
(74) Mandataire: Hennion, Jean-Claude

(56) Documents cités:
- EP-A- 1 264 532
- EP-A1- 0 064 117
- FR-A1- 2 591 849
- US-A- 5 136 831
- US-A1- 2004 000 131

## Description

La présente invention concerne la récolte de matières végétales, plus particulièrement le ramassage de ces matières répandues sur le champ et spécifiquement une machine de mise en balle ronde desdites matières se présentant sous la forme d'une nappe ou andain, s'agissant en particulier de tiges de lin alignées.

La technique la plus ancienne consiste à presser les matières végétales en balle ronde parallélépipédique, la nappe végétale étant pliée et comprimée puis maintenue en forme grâce à des liens. Une telle technique est par exemple connue par le document FR-2.254.272.

La technique la plus récente consiste à enrouler sous pression la nappe de fibre, sous forme d'une balle ronde. Pour les matières fraîches destinées à l'ensilage, dont la conservation est obtenue par la fermentation acide en milieu anaérobique, l'emballage étanche et la tenue de la balle sont réalisés par son enveloppement par un film étirable. Pour les matières sèches, la tenue de la balle est obtenue par liage, soit en utilisant une ficelle faisant un grand nombre de tours sur la périphérie de la balle, soit en utilisant un filet de matière synthétique s'accrochant sur lui-même après un tour et demi ou deux.

C'est la même machine qui réalise le ramassage de la nappe végétale, son enroulement sous forme d'une balle ronde puis son enveloppement ou son liage et enfin son expulsion. Le temps consacré à l'enveloppement ou au liage, et à l'expulsion de la balle, constitue un temps mort pendant lequel la machine ne peut pas ramasser la matière et doit donc être arrêtée. En pratique, le temps de formation d'une balle est de l'ordre de 90 secondes et celui nécessité pour l'enveloppement ou le liage et l'expulsion est de l'ordre de 40 secondes. De plus il peut être parfois nécessaire que le conducteur de la machine effectue une manoeuvre supplémentaire pour déposer la balle à un endroit déterminé où elle n'est pas une gêne pour la circulation ultérieure de la machine.

Différentes machines de mise en balle ronde d'une nappe végétale sont connues et décrites dans les documents EP.1.264.532 et EP.0.064.117. Ces machines de mise en balle ronde d'une nappe végétale réduisent considérablement le temps d'arrêt.

Selon le document EP.1.264.532 la machine comprend trois paires de rouleaux, avec des moyens de déplacement indépendants, l'une des paires de rouleaux faisant office de rouleau amont et les autres de rouleau aval, selon le positionnement des paires de rouleaux en question.

Selon le document EP.0.064.117, la machine comprend un rouleau amont mobile et un jeu de trois rouleaux aval dépendants l'un de l'autre, et des moyens de déplacement unique du jeu de trois rouleaux disposés angulairement à 120° de manière à définir trois portions angulaires de 120° à l'intérieur desquelles se positionnent successivement les balles.

La présente invention a pour but de mettre en oeuvre un nouveau mode de conception de machines de mise en balle ronde qui permet de répondre à la même problématique que les machines décrites dans les documents EP.1.264.532 et EP.0.064.117, à savoir réduire considérablement voire supprimer totalement le temps d'arrêt. La conception de la machine selon l'invention présente pour avantage d'être plus simple de réalisation et d'améliorer les opérations d'enveloppement et de liage qui sont réalisées en temps masqué tout en assurant constamment une compression de la balle.

La machine en question est d'un type connu, notamment par les figures du document FR-2.383.598, en ce qu'elles comportent entre les deux parois verticales d'un châssis :
- une série de courroies, sans fin, montées sur une pluralité de rouleaux, certains étant fixes et d'autres déplaçables par rapport au châssis, lesdits rouleaux étant aptes à assurer la mise en tension et l'entraînement desdites courroies dans une direction donnée,
- une chambre de formation de la balle délimitée en partie par une zone de longueur variable desdites courroies s'étendant entre un rouleau amont et un rouleau aval, dite zone de formation, et
- un dispositif apte à faire varier la longueur des courroies dans ladite zone de formation en fonction du diamètre de la balle.

De manière caractéristique, selon l'invention, le rouleau amont est fixe et la machine comporte un jeu d'au moins deux rouleaux aval équipés de moyens de déplacement indépendants, permettant que chacun d'eux puisse être déplacé indépendamment l'un de l'autre et alternativement faire office de rouleau aval pour la formation de balles successives.

Dans les machines connues, lorsque la balle est terminée, c'est-à-dire qu'elle a atteint le diamètre souhaité, le rouleau aval doit s'escamoter et donc être déplacé d'une distance suffisante pour permettre le passage de la balle terminée et son évacuation de la chambre de formation. La formation de la balle suivante ne peut intervenir que lorsque le rouleau aval a été déplacé en sens inverse jusqu'à reprendre sa position initiale. Ce double déplacement aller et retour du rouleau aval prend un temps important.

C'est ce constat qui a conduit à la conception de la présente invention.

La présence d'un ou plusieurs rouleaux aval de substitution permet de recréer la zone de formation pendant l'escamotage du premier rouleau aval, immédiatement après l'évacuation de la balle terminée de la chambre de formation.

Dans le présent texte, le terme « courroie » est utilisé de manière générale pouvant désigner des bandes de petite largeur, du type sangle, ou encore des chaînes reliées entre elles par des barreaux, à l'instar de ce qui est prévu dans le document FR-2.383.598.

Par souci de simplification, on désigne sous le terme « rouleau aval », tout rouleau destiné à être disposé en sortie de la zone de formation lors de la formation d'une balle, quant bien même ledit rouleau est temporairement dans une position escamotée.

Selon une variante de réalisation, la machine de la présente invention comporte un jeu de deux rouleaux aval, à savoir un premier et un second rouleaux aval, agencés de telle sorte que, pendant la formation d'une première balle, le premier rouleau aval est actif et le second rouleau aval est escamoté et se déplace pour venir, en fin de formation de ladite première balle, prendre la place du premier rouleau aval en vue de la formation d'une seconde balle, le premier rouleau aval s'escamotant alors tout en accompagnant le déplacement de la première balle hors de la chambre de formation.

Ainsi, selon cette configuration particulière, il n'y a que deux rouleaux aval, l'escamotage du premier rouleau aval étant réalisé progressivement de manière à permettre une libération contrôlée de la balle terminée, hors de la chambre de formation.

Selon un mode de réalisation de cette variante, les moyens de déplacement des deux rouleaux aval sont des moyens de déplacement à pivotement, chacun des deux rouleaux aval étant monté sur deux bras latéraux aptes à pivoter autour d'un axe qui est disposé transversalement par rapport aux parois du châssis, les deux dits bras latéraux ayant entre eux un écartement supérieur à la largeur de la balle. Dans ce cas, l'escamotage du premier rouleau aval et le déplacement du second rouleau aval se font selon des arcs de cercle.

Avantageusement, les deux rouleaux aval sont montés à pivotement autour du même axe théorique et à même distance de celui-ci. Chaque rouleau aval a donc la même séquence de déplacement, avec un pivotement angulaire de 360°, lui permettant de retrouver la même place, en aval de la zone de formation, tous les deux cycles de formation de balle.

De préférence, les premiers bras latéraux supportant le premier rouleau aval et les seconds bras latéraux supportant le second rouleau aval sont montés à pivotement sur deux axes coaxiaux, indépendants, équipés de moyens d'entraînement dans les deux sens de rotation. Cette disposition de rendre totalement indépendantes les séquences de déplacement des deux rouleaux aval permet en particulier d'utiliser le rouleau aval, dans sa position escamotée, pour l'accompagnement de la balle terminée dans les opérations subséquentes, notamment de liage.

Selon une variante de réalisation, la chambre de formation de la balle est délimitée également par un cylindre cannelé, entraînant la nappe végétale vers la zone de formation, et par un cylindre de renvoi de la nappe pour le lancement de la première spire de la balle, ledit cylindre cannelé et ledit rouleau de renvoi tournant tous deux dans la direction contraire à celle des courroies.

Selon une variante de réalisation, la machine de la présente invention comporte une chambre de transfert de la balle terminée, délimitée par une zone des courroies de longueur variable, dite zone de transfert, s'étendant en aval de la zone de formation et par un dispositif d'entraînement. De manière caractéristique, le dispositif d'entraînement est monté oscillant entre une position de transfert dans laquelle il est incliné pour faciliter le transfert de la balle et une position de blocage dans laquelle il est sensiblement horizontal pour empêcher le retour de la balle dans la chambre de transfert.

Etant donné que les courroies tournent dans une direction donnée, qui est inverse de celle des moyens complémentaires permettant la formation de la balle, notamment le cylindre cannelé et le rouleau de renvoi précisés ci-dessus, il est nécessaire de contraindre la balle de sortir de la chambre de formation lors de l'escamotage du rouleau aval. Ceci est obtenu grâce à l'inclinaison du dispositif d'entraînement. Lorsque la balle est sortie de la chambre de transfert, le dispositif d'entraînement, dans sa position sensiblement horizontale, permet de former une butée anti-retour.

Au-delà de la chambre de transfert, la machine selon la présente invention comporte une chambre arrière délimitée par une zone des courroies s'étendant en aval de la zone de transfert, ainsi qu'un dispositif d'enveloppement ou de liage pour la tenue de la balle stationnée dans la chambre arrière. Dans ce cas, le passage dans la chambre de transfert n'est qu'une phase transitoire permettant de réaliser les opérations de finition à savoir d'enveloppement ou de liage dans la chambre arrière.

De préférence, la machine selon la présente invention comporte un dispositif de poussée, déplaçable en sorte de s'appliquer sur la face intérieure des courroies, au niveau de la zone de formation, et de repousser lesdites courroies pour aider au déplacement de la balle terminée vers la chambre de transfert et/ou vers la chambre arrière. Ce dispositif vient s'opposer également à la tendance naturelle de la balle qui est de prendre la direction imposée par les courroies, direction qui est à l'inverse de celle nécessaire pour passer de la chambre de formation à la chambre de transfert puis à la chambre arrière.

Par exemple, le dispositif de poussée comporte un rouleau monté entre deux bras latéraux, aptes à pivoter par rapport à un axe qui est disposé transversalement aux parois du châssis.

Selon une variante de réalisation, la machine de la présente invention comporte une trappe d'évacuation de la balle terminée, enveloppée ou liée, donnant sur la chambre arrière et montée à pivotement entre une position fermée dans laquelle elle supporte ladite balle et une position ouverte dans laquelle elle permet l'évacuation de celle-ci. Ainsi, la balle terminée se trouve dans la chambre arrière, lors de son enveloppement ou de son liage, à l'aplomb de la trappe. Lors de l'ouverture de la trappe, par pivotement, la balle terminée, enveloppée ou liée tombe par gravité sur le sol.

La chambre de formation et la chambre de transfert étant délimitées latéralement par deux plaques de maintien, notamment deux tôles métalliques, une ouverture annulaire est de préférence formée dans chacune desdites plaques pour permettre le passage des extrémités des deux rouleaux aval lors de leur pivotement angulaire.

De plus, la portion circulaire de ladite plaque, qui est située à l'intérieur de l'ouverture annulaire, est montée en porte à faux sur l'un des arbres coaxiaux. Cette disposition permet d'éviter que les bras latéraux, supportant les rouleaux aval, ne se trouvent à l'intérieur des chambres de formation et de transfert et ne soient une gêne pour la formation de la balle.

Dans ce mode de réalisation, il est souhaitable que l'ouverture annulaire soit obturée par des pièces d'obturation, configurées en arc de cercle et disposées entre les extrémités des deux rouleaux aval. Ces pièces d'obturation doivent être aptes à coulisser dans ladite ouverture annulaire sous la poussée desdites extrémités, lors du déplacement des rouleaux aval. Ainsi, on évite la perte ou le passage de matières végétales depuis la chambre de formation vers l'extérieur de cette chambre, dans la zone qui s'étend entre les plaques de maintien et les parois du châssis et où se trouvent les parties mécaniques de la machine.

La présente invention sera mieux comprise à la lecture de la description qui va être faite d'un exemple de réalisation d'une machine de mise en balles rondes d'une nappe de lin, illustré par le dessin annexé dans lequel :
La figure 1 est une représentation schématique, très simplifiée, vue de côté, de la machine.
La figure 2 est une vue schématique, très simplifiée, en vue partielle de dessus de l'intérieur de la machine de la figure 1 selon l'axe II-II et
La figure 3 illustre, en dix représentations (3.1 à 3.10) la formation de la balle, son transfert jusqu'à la chambre arrière et son évacuation.

La machine de mise en balles rondes d'une nappe végétale sera plus simplement dénommée enrouleuse 1 dans la suite du texte. Cette enrouleuse 1 est tractée ou autotractée. Elle a pour fonction de ramasser, en se déplaçant dans le sens de la flèche F0, les matières végétales se présentant sous la forme d'une nappe 3 qui sont disposées sur le sol 2 après la récolte. Il peut s'agir notamment de matières végétales fibreuses, telles que des tiges de lin, de chanvre ou de kénaf mais également de tous types de matières végétales connus pour pouvoir être enroulés sous forme de balles rondes, par exemple de la paille, de la luzerne.

L'enrouleuse 1 comporte, à sa partie avant, un dispositif d'alimentation 4, généralement dénommé pick-up, qui dans l'exemple illustré est constitué par un cylindre 5 muni de doigts rétractables 6, aptes à prélever la nappe 3 du sol 2 et la transporter vers la chambre de formation de la balle 7, laquelle chambre de formation 7 est délimitée par un cylindre cannelé 8, un rouleau de renvoi 9 et une portion de courroies 10 qui s'étend entre un rouleau amont 11 et un rouleau aval 12, cette portion étant dénommée ci-après zone de formation 10a. Le cylindre cannelé 8 et le rouleau fixe 9 tournent tous les deux, autour de leur axe, dans le sens de la flèche F1, tandis que les courroies 10 se déplacent, à contresens, selon la flèche F2.

L'enrouleuse 1 comporte un châssis 13 qui est constitué de deux tôles verticales en acier reliées par des entretoises, formant la structure de l'enrouleuse. C'est entre ces deux tôles que sont fixés tous les rouleaux, mobiles autour de leur axe de rotation, transversal aux deux tôles, qui supportent et entraînent les courroies 10. Certains de ces rouleaux ont un positionnement fixe par rapport au châssis, tandis que d'autres sont déplaçables.

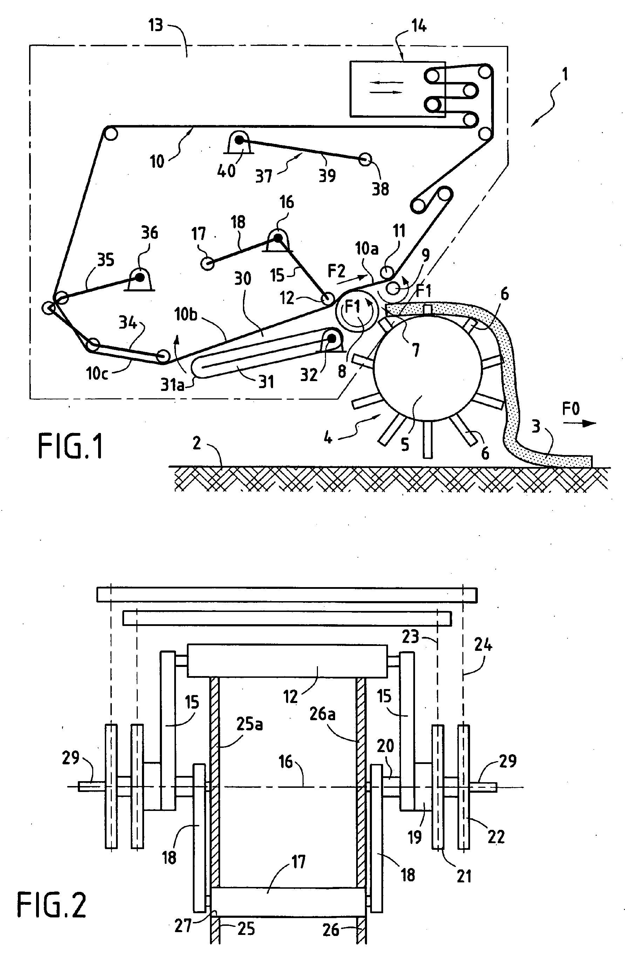

Les courroies 10 sont en l'occurrence constituées d'un jeu de quatre à six courroies, parallèles entre elles, réparties à égale distance l'une de l'autre sur la longueur des rouleaux. Un dispositif de tension 4 dont la trajectoire est linéaire comme dans l'exemple de la figure 1, mais qui peut également être en arc de cercle, assure une tension définie, constante et réglable sur les courroies 10.

Dans le présent texte, les termes amont et aval sont pris en considération du sens de déplacement de la balle à l'intérieur de l'enrouleuse 1.

Dans la chambre de formation 7, le rouleau de renvoi 9 se trouve en amont du cylindre cannelé 8, de même que le rouleau amont 11 se trouve en amont du rouleau aval 12. Le rouleau amont 11 est fixe, tandis que le rouleau aval 12 est déplaçable, étant monté pivotant à l'extrémité de deux bras latéraux 15, l'autre extrémité des deux dits bras latéraux étant pivotant autour d'un axe théorique de rotation 16. De plus il est prévu selon l'invention un second rouleau aval de substitution 17 qui est également monté à pivotement sur deux bras latéraux 18, ayant le même axe théorique de rotation 16 que les deux bras latéraux 15 supportant le premier rouleau aval 12. En pratique, les deux jeux 15, 18 de bras latéraux sont montés sur deux arbres coaxiaux respectivement 19 pour les bras latéraux 15 et 20 pour les bras latéraux 18 (figure 2). Les deux arbres coaxiaux 19, 20 sont équipés de moyens de déplacement indépendants, s'agissant par exemple d'un entraînement par poulie 21, 22 et par chaîne 23, 24. Chacun des premier 12 et second 17 rouleaux aval peut donc être déplacé indépendamment de l'autre, dans le sens des aiguilles d'une montre ou à contresens.

La chambre de formation 7 est délimitée latéralement par deux plaques de maintien 25, 26, partiellement visibles sur la figure 2. Ces deux plaques sont disposées entre les bras latéraux 18, les moins écartés, de manière à ce que lesdits bras ne soient pas une gêne pour la formation de la balle comme cela va être vu ci-après. C'est dans l'espace qui s'étend de part et d'autre des plaques de maintien 25, 26 jusqu'aux tôles du châssis 13 que se trouvent toutes les parties mécaniques de l'enrouleuse 1. Comme cela apparaît clairement à l'examen de la figure 2, les extrémités des deux rouleaux aval 12, 17 doivent nécessairement passer à travers les deux plaques de maintien 25, 26 lors de leur déplacement circulaire. Pour cela, les plaques de maintien 25, 26 sont percées de deux ouvertures annulaires 27 dont la largeur est déterminée pour permettre le passage ajusté des rouleaux 12, 17. La partie circulaire 25a, 26a des deux plaques 25, 26 qui s'étend sur l'intérieur de l'ouverture annulaire 27 est maintenue en position grâce à une entretoise 29 passant à travers les arbres coaxiaux 19, 20, ladite entretoise 29 étant fixée sur le châssis 13. Les portions circulaires 25a, 26a sont donc supportées en porte-à-faux par rapport audit châssis 13.

Pour éviter que les matières végétales puissent passer à travers l'ouverture annulaire 27, ladite ouverture est obturée au moins partiellement par des pièces d' obturation non représentées, s'étendant entre les deux rouleaux aval 12, 17 et aptes à coulisser sous la poussée desdits rouleaux 12, 17 lors du déplacement de ceux-ci dans l'ouverture 27. Il s'agit de pièces d'obturation réalisées dans une matière dont le coefficient de frottement est faible, s'agissant notamment d'un plastique rigide, d'une pièce en bronze ou éventuellement d'une pièce en métal avec des moyens de graissage.

L'enrouleuse 1 comporte également, en aval de la chambre de formation 7, une chambre de transfert 30 qui est délimitée par une portion 10b des courroies 10, dénommée zone de transfert, et un dispositif d'entraînement 31, qui est constitué par un tapis roulant ou une succession de rouleaux. Ce dispositif d'entraînement 31, qui s'étend sous la zone de transfert 10b, est monté oscillant autour d'un axe de rotation 30, entre une position de transfert, telle qu'illustrée à la figure 1, dans laquelle il présente une certaine inclinaison vers le bas, depuis l'amont vers l'aval, et une position de blocage dans laquelle il est sensiblement horizontal.

L'enrouleuse 1 comporte également, en aval de la chambre de transfert 30, une chambre arrière 33 qui est délimitée par une portion 10c de la courroie 10 s'étendant au-delà de la chambre de transfert 30. Cette chambre arrière 33 sert notamment à l'enveloppement ou au liage de la balle terminée. C'est de cette chambre arrière 33 qu'est évacuée la balle une fois enveloppée, vers l'extérieur de l'enrouleuse 1.

Pour cette évacuation, il est prévu une trappe 34, donnant sur la chambre arrière 33 et montée à pivotement, par exemple grâce à deux bras latéraux 35, autour d'un axe 36, transversal aux tôles verticales constituant le châssis 13. Cette trappe 34 peut adopter, lors de son pivotement autour de l'axe 36, une position fermée, comme illustrée à la figure 1, dans laquelle elle supporte la balle terminée et une position ouverte dans laquelle elle permet l'évacuation de celle-ci hors de l'enrouleuse 1, la balle tombant alors sur le sol 2.

L'enrouleuse 1 comporte enfin un dispositif de poussée 37 qui est déplaçable en sorte de s'appliquer sur la face intérieure des courroies 10, au niveau de la zone de formation 10a, et de repousser lesdites courroies pour aider au déplacement de la balle terminée depuis la chambre de formation 7 vers la chambre de transfert 30 et éventuellement vers la chambre arrière 33. Ce dispositif de poussée 37, dans l'exemple illustré, comporte un rouleau 38, qui est monté entre deux bras latéraux 39 aptes à pivoter autour d'un axe 40 monté transversalement aux tôles verticales du châssis 13.

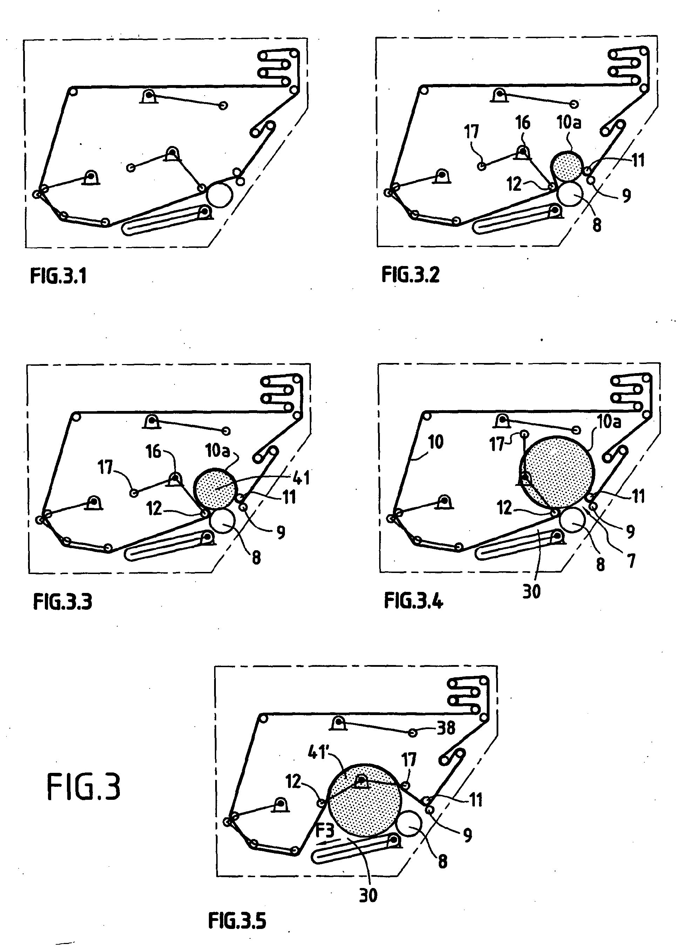

Le fonctionnement de l'enrouleuse 1 va être décrit en relation avec les figures, la figure 3.1 illustrant la disposition des différents éléments avant l'introduction de la nappe 3.

La nappe végétale 3 qui est prélevée par le pick-up 4 pénètre dans la chambre de formation 7 (figure 1). Elle rencontre tout d'abord le cylindre cannelé 8 qui l'entraîne vers la zone de formation 10a des courroies 10. Ces courroies 10, tournant en sens inverse du cylindre cannelé 8, repoussent la nappe 3 selon la flèche F2. Ladite nappe 3, remontant de l'aval vers l'amont la zone de formation 10a, rencontre le rouleau de renvoi 9 qui la repousse de nouveau, ce qui permet d'initier la première spire de la première balle. Les autres spires se forment spontanément autour de la première spire, dans la chambre de formation 7 (figure 3.2). Lors de l'accumulation des spires et donc du grossissement de la première balle 41 (figure 3.3), la longueur de la zone de formation 10a augmente, grâce au déplacement du dispositif de tension 14. Pendant la formation de la première balle 41, le second rouleau aval 17, qui était escamoté est amené à se déplacer dans le sens des aiguilles d'une montre jusqu'à venir sur l'arrière de la zone de formation 10a à l'opposée du cylindre cannelé 8 (figure 3.4).

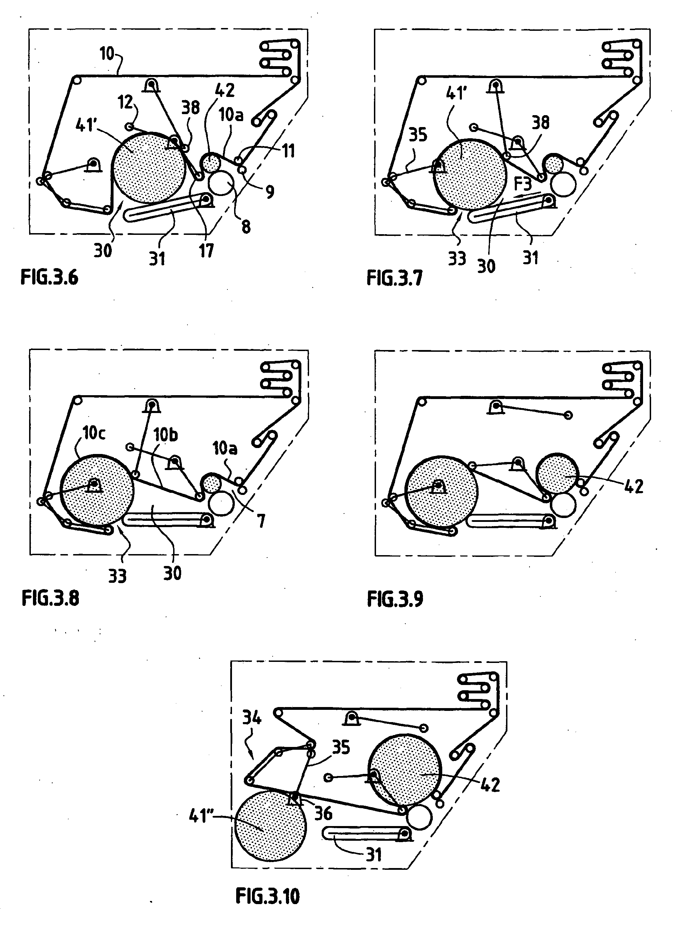

Lorsque le diamètre de la première balle 41 atteint une valeur prédéterminée, la première balle terminée 41' va être évacuée de la chambre de formation 7 vers la chambre de transfert 30. Pour cela, les deux rouleaux aval 12, 17 se déplacent en même temps. Le premier rouleau aval 12, s'escamote en se déplaçant dans le sens des aiguilles d'une montre (figure 3.5), jusqu'à dégager un passage suffisant pour que la première balle terminée 41' puisse basculer sur le dispositif d'entraînement 31, passant dans la chambre de transfert 30 (figure 3.6). Dans le même temps, d'une part le second rouleau 17 aval poursuit son déplacement dans le même sens jusqu'à venir se placer dans la même position qu'avait le premier rouleau aval 12 pendant la formation de la première balle 41 et d'autre part le rouleau de poussée 38 se déplace jusqu'à venir en appui sur la face intérieure des courroies 10 dans la zone de transfert et repousser la première balle terminée 41' pour l'aider dans son basculement vers le dispositif d'entraînement (figure 3.6). Le dispositif d'entraînement 31 entraîne la première balle terminée vers la chambre arrière 33, par sa rotation (flèche F₃) et son inclinaison, étant en cela aidé par le rouleau de poussée 38 qui poursuit son déplacement (figure 3.7), jusqu'à ce que la première balle terminée 41' soit en appui sur la trappe 34 (figure 3.8) qui est en position fermée. Le rouleau de poussée 38 retourne alors dans sa position initiale tandis que le premier rouleau aval 12 se déplace, de sa position escamotée (figure 3.6), en sens inverse pour prendre la place qu'avait le rouleau de poussée 38 (figure 3.9), repoussant la première balle terminée 41' pour éviter qu'elle ne revienne vers la chambre de transfert. Dans cette position (figure 3.9), la première balle terminée 41' est maintenue en place par le premier rouleau aval 12 et par l'extrémité aval 31a du dispositif d'entraînement 31, qui a pivoté vers le haut dès que la première balle terminée 41' est arrivée sur la trappe 34 (figure 3.8). C'est dans cette position que peut intervenir l'opération d'enveloppement ou de liage de la première balle terminée 41'. Bien sûr, dès que le second rouleau aval 17 a pris la place qu'avait le premier rouleau aval 12 dans la zone de formation, la seconde balle 42 a commencé à se former (figure 3.6) et à grossir (figure 3.9). Avant que la seconde balle 42 n'atteigne le diamètre requis, l'opération d'enveloppement ou de liage étant terminée, la première balle terminée enveloppée ou liée 41" est évacuée de la chambre arrière 33, grâce à l'ouverture de la trappe 34, qui bascule autour de son axe 36 (figure 3.10). Et le cycle peut reprendre (figure 3.4) pour le transfert de la seconde balle 42 terminée vers la chambre de transfert et la chambre arrière et pour la formation de la balle suivante, tous les éléments revenant dans leur position initiale (figure 3.1).

On comprend que les chambres de formation, de transfert et arrière n'occupent pas un espace défini, mais un espace variable en fonction de la présence ou de l'absence de la balle, et en fonction de l'état de grossissement de celle-ci. La variation de cet espace est obtenue grâce à la variation de la longueur des courroies dans la zone délimitant cet espace.

Tout le séquencement du cycle de fonctionnement qui a été décrit ci-dessus est réalisé grâce à un automatisme, programmé en conséquence, pour commander les déplacements des différents éléments de l'enrouleur 1.

Grâce à la substitution très rapide du premier rouleau aval 12 par le second rouleau aval 17, lors de l'évacuation de la première balle terminée 41', il n'y a pas nécessité d'arrêter l'enrouleur 1 dans sa progression, la zone de formation 10a n'étant inactive que pendant un temps très court (figure 3.5).

La présente invention n'est pas limitée au mode de réalisation qui a été décrit à titre d'exemple non exhaustif. En particulier, il pourrait y avoir un nombre plus important de rouleaux aval de substitution, mais cela pourrait rendre la fabrication plus complexe.

## Revendications

1. Machine (1) de mise en balle ronde d'une nappe végétale (3), comportant, entre les deux parois verticales d'un châssis (13) :
- une série de courroies (10), sans fin, montées sur une pluralité de rouleaux, certains étant fixes et d'autres déplaçables par rapport au châssis, lesdits rouleaux étant aptes à assurer la mise en tension et l'entraînement desdites courroies dans une direction donnée,
- une chambre de formation (7) de la balle délimitée en partie par une zone de longueur variable desdites courroies (10) s'étendant entre un rouleau amont (11) et un rouleau aval, dite zone de formation (10a),
- un dispositif (14) apte à faire varier la longueur des courroies dans ladite zone de formation (10a) en fonction du diamètre de la balle (41),
**caractérisée en ce que** le rouleau amont (11) est fixe et **en ce qu'**elle comporte un jeu d'au moins deux rouleaux aval (12,17) équipés de moyens de déplacement indépendants, permettant que chacun d'eux puisse être déplacé indépendamment l'un de l'autre et alternativement faire office de rouleau aval pour la formation de balles successives.

2. Machine selon la revendication 1 **caractérisée en ce qu'**elle comporte un jeu de deux rouleaux aval, à savoir un premier (12) et un second (17) rouleaux aval, agencés de telle sorte que, pendant la formation d'une première balle (41), le premier rouleau aval (12) est actif et le second rouleau aval (17) est escamoté et se déplace pour venir, en fin de formation de la première balle (41'), prendre la place du premier rouleau aval (12) en vue de la formation d'une seconde balle (42'), le premier rouleau aval (12) s'escamotant alors tout en accompagnant le déplacement de la première balle (41') hors de la zone de formation (10a).

3. Machine selon la revendication 2 **caractérisée en ce** les moyens de déplacement des deux rouleaux aval sont des moyens de déplacement à pivotement, chacun des deux rouleaux aval (12,17) étant monté sur deux bras latéraux (15,18) aptes à pivoter autour d'un axe transversal (16) aux parois du châssis (13) et ayant entre eux un écartement supérieur à la largeur de la balle (41).

4. Machine selon la revendication 3 **caractérisée en ce que** les deux rouleaux aval (12,17) sont montés à pivotement autour du même axe théorique (16) et à même distance de celui-ci, chaque rouleau aval faisant un pivotement de 360° autour dudit axe (16), pour retrouver sa place entre deux cycles de formation de balle.

5. Machine selon la revendication 4 **caractérisée en ce que** les premiers bras latéraux (15) supportant le premier rouleau aval (12) et les seconds bras latéraux (18) supportant le second rouleau aval (17) sont montés à pivotement sur deux arbres coaxiaux (19,20), indépendants, équipés de moyens d'entraînement (21, 23, 22, 24) dans les deux sens de rotation.

6. Machine selon l'une des revendications 1 à 5 **caractérisée en ce que** la chambre de formation (7) de la balle est délimitée également par un cylindre cannelé (8), entraînant la nappe végétale (3) vers la zone de formation (10a), et par un rouleau de renvoi (9) de la nappe (3) pour le lancement de la première spire de la balle, ledit cylindre cannelé (8) et ledit rouleau de renvoi (9) tournant tous deux dans la direction contraire (F₁) à celle des courroies (F₂).

7. Machine selon l'une des revendications 1 à 6 **caractérisée en ce qu'**elle comporte une chambre de transfert (30) de la balle terminée (41') délimitée par une zone des courroies de longueur variable, dite zone de transfert (10b), s'étendant en aval de la zone de formation (10a) et par un dispositif d'entraînement (31) et **en ce que** le dispositif d'entraînement (31) est monté oscillant entre une position de transfert dans laquelle il est incliné pour faciliter le transfert de la balle et une position de blocage dans laquelle il est sensiblement horizontal pour empêcher le retour de la balle dans la chambre de transfert (30).

8. Machine selon la revendication 7 **caractérisée en ce qu'**elle comporte une chambre arrière de la balle terminée (41') délimitée par une zone des courroies, s'étendant en aval de la zone de transfert (10b), et un dispositif d'enveloppement ou de liage de la balle stationnée dans ladite chambre arrière.

9. Machine selon l'une des revendications 7 ou 8 **caractérisée en ce qu'**elle comporte un dispositif de poussée (37), déplaçable en sorte de s'appliquer sur la face intérieure des courroies (10) et de repousser lesdites courroies pour aider au déplacement de la balle terminée (41') vers la chambre de transfert (30) et/ou vers la chambre arrière (33).

10. Machine selon la revendication 9 **caractérisée en ce que** le dispositif de poussée (37) comporte un rouleau (38) monté entre deux bras latéraux (39), aptes à pivoter par rapport à un axe (40) transversal aux parois du châssis (13).

11. Machine selon l'une des revendications 8 à 10 **caractérisée en ce qu'**elle comporte une trappe (34) d'évacuation de la balle enveloppée ou liée (41"), donnant sur la chambre arrière (33), montée à pivotement entre une position fermée dans laquelle elle supporte ladite balle et une position ouverte dans laquelle elle permet l'évacuation de ladite balle.

12. Machine selon la revendication 5 et l'une des revendications 7 à 11 **caractérisée en ce que**, la chambre de formation (7) de la balle et la chambre de transfert (30) étant délimitées latéralement par deux plaques (25,26), une ouverture annulaire (27) est formée dans chacune desdites plaques pour permettre le passage des extrémités des deux rouleaux aval (12, 17) lors de leur pivotement angulaire et **en ce que** la portion circulaire (25a, 26a) de ladite plaque (25, 26) située à l'intérieur de l'ouverture annulaire (27) est fixée au châssis (13) en porte-à-faux, par une entretoise (29) passant à travers les arbres coaxiaux (19, 20).

13. Machine selon la revendication 12 **caractérisée en ce que** l'ouverture annulaire (27) est au moins partiellement obturée par des pièces d'obturation en arc de cercle disposées entre les extrémités des deux rouleaux aval (12, 17) et aptes à coulisser dans ladite ouverture (27) sous la poussée desdites extrémités.

## Claims

1. A machine (1) for making a round bale from a row of vegetable matter (3), the machine comprising, between two vertical walls of a chassis (13):
• a series of endless belts (10) mounted on a plurality of rolls, some being stationary and others movable relative to the chassis, said rolls being suitable for tensioning and driving said belts in a given direction;
• a bale-forming chamber (7) defined in part by a variable-length zone of said belts (10) extending between an upstream roll (11) and a downstream roll, referred to as a forming zone (10a); and
• a device (14) suitable for varying the lengths of the belts in said forming zone (10a) as a function of the diameter of the bale (41);
the machine being **characterized in that** the upstream roll (11) is stationary and **in that** it includes a set of at least two downstream rolls (12, 17) fitted with independent movement means, enabling each of them to be moved independently of the other and to act in alternation as the downstream roll for forming successive bales.

2. A machine according to claim 1, **characterized in that** it includes a set of two downstream rolls, namely first and second downstream rolls (12, 17), arranged in such a manner that, while a first bale (41) is being formed, the first downstream roll (12) is active and the second downstream roll (17) is retracted and is moved, so that at the end of forming the first bale (41'), it takes the place of the first downstream roll (12) in order to form a second bale (42'), the first downstream roll (12) then being retracted while accompanying the movement of the first bale (41') out from the forming zone (10a).

3. A machine according to claim 2, **characterized in that** the means for moving the two downstream rolls are pivot movement means, each of the downstream rolls (12, 17) being mounted on two lateral arms (15, 18) suitable for pivoting about an axis (16) extending transversely to the walls of the chassis (13) and spaced apart by a spacing that is greater than the width of the bale (41).

4. A machine according to claim 3, **characterized in that** the two downstream rolls (12, 17) are mounted to pivot about a common axis (16) and at the same distance therefrom, each downstream roll pivoting through 360° about said axis (16) in order to take up its position between two bale-forming cycles.

5. A machine according to claim 4, **characterized in that** the first lateral arms (15) supporting the first downstream roll (12) and the second lateral arms (18) supporting the second downstream roll (17) are mounted to pivot on two independent coaxial shafts (19, 20) fitted with drive means (21, 23, 22, 24) for driving in both directions of rotation.

6. A machine according to any one of claims 1 to 5, **characterized in that** the bale-forming chamber (7) is also defined by a fluted cylinder (8) entraining the row of vegetable matter (3) towards the forming zone (10a), and by a deflector roll (9) for deflecting the row (3) to begin the first turn of the bale, said fluted cylinder (8) and said deflector roll (9) both turning in the direction (F₁) opposite to the belts (F₂).

7. A machine according to any one of claims 1 to 6, **characterized in that** it includes a transfer chamber (30) for transferring the finished bale (41'), the transfer chamber being defined by a variable-length belt zone, referred to as the transfer zone (10b) extending downstream from the forming zone (10a), and by a conveyor device (31), and **in that** the conveyor device (31) is mounted to oscillate between a transfer position in which it is inclined to facilitate transferring the bale, and a blocking position in which it is substantially horizontal to prevent the bale from returning into the transfer chamber (30).

8. A machine according to claim 7, **characterized in that** it includes both a rear chamber for the finished bale (41') which chamber is defined by a belt zone, extending downstream from the transfer zone (10b), and a device for wrapping or binding the bale stationed in said rear chamber.

9. A machine according to claim 7 or claim 8, **characterized in that** it includes a thrust device (37) movable to bear against the inside faces of the belts (10) and to push said belts back in order to assist in moving the finished bale (41') towards the transfer chamber (30) and/or towards the rear chamber (33).

10. A machine according to claim 9, **characterized in that** the thrust device (37) comprises a roll (38) mounted between two lateral arms (39) suitable for pivoting about an axis (40) extending transversely to the walls of the chassis (13).

11. A machine according to any one of claims 8 to 10, **characterized in that** it includes a hatch (34) for ejecting a wrapped or bound bale (41"), leading to the rear chamber (33) and mounted to pivot between a closed position in which it supports said bale and an open position in which it enables said bale to be ejected.

12. A machine according to claim 5 and any one of claims 7 to 11, **characterized in that** the bale-forming chamber (7) and the transfer chamber (30) are defined laterally by two plates (25, 26), and an annular opening (27) is formed in each of said plates to allow the ends of the two downstream rolls (12, 17) to pass while they are pivoting angularly, and **in that** the circular portion (25a, 26a) of said plate (25, 26) situated inside the annular opening (27) is fastened to the chassis (13) in cantilevered-out manner by a spacer (29) passing through the coaxial shafts (19, 20).

13. A machine according to claim 12, **characterized in that** the annular opening (27) is closed at least in part by circularly arcuate closure pieces disposed between the ends of the two downstream rolls (12, 17) and adapted to slide in said opening (27) under thrust from said ends.

## Patentansprüche

1. Maschine (1) zum Wickeln einer Pflanzenschicht (3) zu einem Rundballen, umfassend zwischen den beiden vertikalen Wänden eines Rahmens (13):
- eine Reihe von Endlosriemen (10), die an einer Vielzahl von Rollen angebracht sind, wobei einige fest und andere gegenüber dem Rahmen beweglich sind, wobei die Rollen geeignet sind, das Spannen sowie den Antrieb der Riemen in einer vorgegebenen Richtung zu gewährleisten,
- eine Kammer zum Bilden (7) des Ballens, die durch einen Bereich variabler Länge der Riemen (10), den sogenannten Bildungsbereich (10a), der sich zwischen einer vorgeschalteten Rolle (11) und einer nachgeschalteten Rolle erstreckt, teilweise begrenzt ist,
- eine Vorrichtung (14), die geeignet ist, die Länge der Riemen in dem Bildungsbereich (10a) in Abhängigkeit des Durchmessers des Ballens (41) zu ändern,
**dadurch gekennzeichnet, daß** die vorgeschaltete Rolle (11) fest ist und daß sie, die Maschine, einen Satz aus wenigstens zwei nachgeschalteten Rollen (12, 17) umfaßt, die mit unabhängigen Bewegungsmitteln versehen sind, die ermöglichen, daß jede von ihnen unabhängig voneinander bewegt werden und abwechselnd als nachgeschaltete Rolle für die Bildung aufeinanderfolgender Ballen dienen kann.

2. Maschine nach Anspruch 1, **dadurch gekennzeichnet, daß** sie einen Satz aus zwei nachgeschalteten Rollen, nämlich einer ersten (12) und einer zweiten (17) nachgeschalteten Rolle umfaßt, die derart angeordnet sind, daß während des Bildens eines ersten Ballens (41) die erste nachgeschaltete Rolle (12) aktiv und die zweite nachgeschaltete Rolle (17) eingefahren ist und sich bewegt, um am Ende des Bildens des ersten Ballens (41') zur Bildung eines zweiten Ballens (42') den Platz der ersten nachgeschalteten Rolle (12) einzunehmen, wobei sich die erste nachgeschaltete Rolle (12) dann zurückzieht und gleichzeitig die Bewegung des ersten Ballens (41') aus dem Bildungsbereich (10a) heraus begleitet.

3. Maschine nach Anspruch 2, **dadurch gekennzeichnet, daß** die Mittel zum Bewegen der beiden nachgeschalteten Rollen Schwenkbewegungsmittel sind, wobei eine jede der beiden nachgeschalteten Rollen (12, 17) an zwei Seitenarmen (15, 18) angebracht ist, die geeignet sind, um eine zu den Wänden des Rahmens (13) querverlaufende Achse (16) zu schwenken und zwischen sich einen Abstand aufweisen, der größer als die Breite des Ballens (41) ist.

4. Maschine nach Anspruch 3, **dadurch gekennzeichnet, daß** die beiden nachgeschalteten Rollen (12, 17) um die gleiche theoretische Achse (16) schwenkbar und im gleichen Abstand von dieser angebracht sind, wobei jede nachgeschaltete Rolle eine 360°-Drehung um die Achse (16) ausführt, um zwischen zwei Ballenbildungszyklen wieder ihren Platz einzunehmen.

5. Maschine nach Anspruch 4, **dadurch gekennzeichnet, daß** die ersten Seitenarme (15), welche die erste nachgeschaltete Rolle (12) tragen, und die zweiten Seitenarme (18), welche die zweite nachgeschaltete Rolle (17) tragen, um zwei unabhängige koaxiale Wellen (19, 20), die mit Mitteln zum Antreiben (21, 23, 22, 24) in beide Drehrichtungen versehen sind, schwenkbar angebracht sind.

6. Maschine nach einem der Ansprüche 1 bis 5, **dadurch gekennzeichnet, daß** die Kammer zum Bilden (7) des Ballens auch durch eine Nutenwalze (8), die die Pflanzenschicht (3) zum Bildungsbereich (10a) mitführt, und durch eine Rolle zum Umlenken (9) der Schicht (3) zum Einleiten der ersten Windung des Ballens begrenzt ist, wobei die Nutenwalze (8) und die Umlenkrolle (9) sich beide in zur Richtung der Riemen (F₂) entgegengesetzter Richtung (F₁) drehen.

7. Maschine nach einem der Ansprüche 1 bis 6, **dadurch gekennzeichnet, daß** sie eine Kammer zum Übertragen (30) des fertiggestellten Ballens (41') umfaßt, die durch einen Bereich variabler Länge der Riemen, den sogenannten Transferbereich (10b), der sich hinter dem Bildungsbereich (10a) erstreckt, sowie durch eine Antriebsvorrichtung (31) begrenzt ist, und daß die Antriebsvorrichtung (31) zwischen einer Übertragungsposition, in der sie geneigt ist, um die Übertragung des Ballens zu erleichtern, und einer Blockierstellung, in der sie im wesentlichen horizontal ist, um das Zurückrollen des Ballens in die Übertragungskammer (30) zu verhindern, schwenkbar angebracht ist.

8. Maschine nach Anspruch 7, **dadurch gekennzeichnet, daß** sie eine hintere Kammer des fertiggestellten Ballens (41'), die durch einen sich hinter dem Transferbereich (10b) erstreckenden Riemenbereich begrenzt ist, sowie eine Vorrichtung zum Einwickeln oder Zusammenbinden des in der hinteren Kammer aufgenommenen Ballens umfaßt.

9. Maschine nach einem der Ansprüche 7 oder 8, **dadurch gekennzeichnet, daß** sie eine Schubvorrichtung (37) umfaßt, die derart beweglich ist, daß sie an der Innenseite der Riemen (10) zur Anlage kommt und die Riemen zurückdrückt, um die Bewegung des fertiggestellten Ballens (41') in Richtung der Übertragungskammer (30) und/oder in Richtung der hinteren Kammer (33) zu unterstützen.

10. Maschine nach Anspruch 9, **dadurch gekennzeichnet, daß** die Schubvorrichtung (37) eine Rolle (38) umfaßt, die zwischen zwei Seitenarmen (39) angebracht ist, welche geeignet sind, gegenüber einer zu den Wänden des Rahmens (13) querverlaufenden Achse (40) zu verschwenken.

11. Maschine nach einem der Ansprüche 8 bis 10, **dadurch gekennzeichnet, daß** sie eine Klappe (34) zum Abführen des eingewickelten oder zusammengebundenen Ballens (41 ") aufweist, die zur hinteren Kammer (33) führt und zwischen einer geschlossenen Position, in der sie den Ballen trägt, und einer geöffneten Position, in der sie das Abführen des Ballens ermöglicht, schwenkbar angebracht ist.

12. Maschine nach Anspruch 5 und einem der Ansprüche 7 bis 11, **dadurch gekennzeichnet, daß** - da die Kammer zum Bilden (7) des Ballens und die Übertragungskammer (30) durch zwei Platten (25, 26) seitlich begrenzt sind - eine ringförmige Öffnung (27) in jeder der Platten ausgebildet ist, um den Durchgang der Enden der beiden nachgeschalteten Rollen (12, 17) bei ihrem winkelmäßigen Verschwenken zu ermöglichen, und daß der kreisförmige Abschnitt (25a, 26a) der Platte (25, 26), der innerhalb der ringförmigen Öffnung (27) liegt, durch eine die koaxialen Wellen (19, 20) durchgreifende Strebe (29) an dem Rahmen (13) auskragend befestigt ist.

13. Maschine nach Anspruch 12, **dadurch gekennzeichnet, daß** die ringförmige Öffnung (27) durch kreisbogenförmige Verschlußteile, die zwischen den Enden der beiden nachgeschalteten Rollen (12, 17) angeordnet und geeignet sind, unter dem Schub der Enden in der Öffnung (27) zu gleiten, wenigstens teilweise verschlossen ist.
